# EUROPEAN PATENT SPECIFICATION

(11) **EP 0 609 896 B1**
(45) Date of publication and mention of the grant of the patent: **02.05.1997**
(21) Application number: 94101723.8
(22) Date of filing: 04.02.1994
(51) Int. Cl.: C02F 3/06, C02F 7/00

(54) **Floating water purification device and water purification method**
Schwimmende Vorrichtung zur Wasserreinigung und Verfahren zur Wasserreinigung
Dispositif flottant pour la purification d'eau et procédé pour la purification d'eau

(30) Priority: 05.02.1993 JP 42217/93
(43) Date of publication of application: 10.08.1994
(73) Proprietor: RESOURCE BIOLOGY RESEARCH INSTITUTE Co., Ltd., Tokyo (JP)
(72) Inventor: Senda, Shohei, Ibaragi-ken (JP); Hasegawa, Moriju, Nerima-ku, Tokyo (JP)
(74) Representative: Patentanwälte Dr. Solf & Zapf

(56) References cited:
- WO-A-94/06720
- US-A- 5 122 266
- PATENT ABSTRACTS OF JAPAN vol. 14, no. 370 (C-0747)10 August 1990 & JP-A-02 135 191 (KAZUO HATTORI) 24 May 1990

## Description

### Field of the Invention

This invention relates to a method of purifying polluted water using a water purification device, and more specifically, to a method of eliminating water-bloom using a water purification device which floats and is free to move in water.

### Background of the Invention

In recent years, now that environmental pollution and energy saving are coming to be regarded as serious problems, new processes have been developed which bring about the oxidation of organic matter in water via the biological action of microorganisms (e.g. Japanese TokkaiSho 62-3784, Tokkai Hei 3-127692 and Tokkai Hei 4-222587).

However, despite increasingly serious pollution of the world's lakes and oceans, and the fact that pollution is now affecting even ponds and marshes, no device had yet been developed which could provide a solution to the problem.

The Inventors, as a result of intensive studies on the purification of polluted water in outdoor locations such as ponds, lakes and marshes, developed a method whereby a treatment tank comprising a plurality of biological supports having biological activity is made to float beneath the water surface, and polluted water is efficiently purified without removing it to another location by passing it through the tank. In particular they found that, when light was shielded from part of the passage through which the polluted water passes, water-bloom dries up and dies so that highly efficient and easy purification can be achieved.

US-A 5,122,266 discloses an apparatus for the cleaning of water in which the apparatus is positioned, through the biological oxidation of microbiologically digestable compounds whithin the water, comprising in combination: filter means positionable in the water to be cleaned, the filter means having pluralities of surfaces provided high surface area per volume; biological agents supported on the surfaces for cleaning the water in which it is positioned by digesting microbiologically digestable compounds in the water flowing through the filter means; locating means for locating the filter means spaced from the bottom of the water to be cleaned; pump means with a discharge component for effecting the flow of a pressurized fluid through the water and across the surfaces in circuitous paths for the cleaning and redistribution of the water; and positioning means to position the discharge component beneath the filter means and above the bottom of the water for directing the flow of water through the filter means for cleaning purpose. The filter of this known apparatus is formed of corrugated, rigid polyvinyl chloride sheet. In the apparatus, the fluid (as a pressurized mixture of water and air) travels vertically through a series of serpentine channels formed by the corrugations of each layer of rigid PVC sheeting laid on each other. Therefore, this document cannot suggest an overall horizontal fluid flow nor a sedimentation zone. The upward flow of the pressurized mixture comprising water and air would deter a separation by sedimentation.

Patent Abstracts of Japan of Vol. 14, No. 370, August 1990 and JP-A 02135191 disclose a surface biological water treatment utilizing a light shielding plate. The light shield covers the whole top surface of a treating vessel and is green-colored so that light of specified wavelength is permeable thereinto. This document aims at the retention of biological activity (or ensuring the generation of green algae) even in winter season by designing the light shield in that way (as described, e.g., at page 2, lower left column). On the other hand, the present light shield is provided in order to kill water-bloom.

### SUMMARY OF THE INVENTION

It is therefore a first object of this invention to provide a floating water purification device which can purify outdoor polluted water where it occurs.

It is a further object of this invention to provide a floating water purification device which can in particular efficiently purify water polluted by water-bloom.

It is another object of this invention to provide a water purification method which is particularly suitable for purifiying ocean, lake and marsh water.

It is yet another object of this invention to provide a water purification method which efficiently eliminates water-bloom.

The above objects are attained by a floating water purification device comprising a floating water purification device comprising at least a treatment tank having no base enclosing a certain water area and a float which causes said tank to float in water, characterized in that said treatment tank comprises a plurality of inner U-shaped biological supports woven on a frame together with side walls enclosing the water area, at least one water inlet in a first vertical side wall and at least one water outlet in a second vertical side wall facing said first side wall; at least one vertical partition dividing the tank into a plurality of areas to ensure that water will stay within the tank for a time sufficient for purification, wherein said device is provided with means for recirculating and/or discharging water in a treatment tank and which is further provided with light-shielding means on the upper surface of said tank whereby at least part of said tank is shielded from light, said light-shielding means being positioned upstream inside the tank and adjacent to a sedimentation zone and to said at least one water inlet in the vicinity of which said tank is capable of functioning as a sedimentation tank, so that polluted water outside the sedimentation area enters an area shielded from light of said at least one water inlet and adjacent a sedimentation zone wherein said tank is capable of functioning as a sedimentation tank.

### BRIEF DESCRIPTION OF THE DRAWINGS

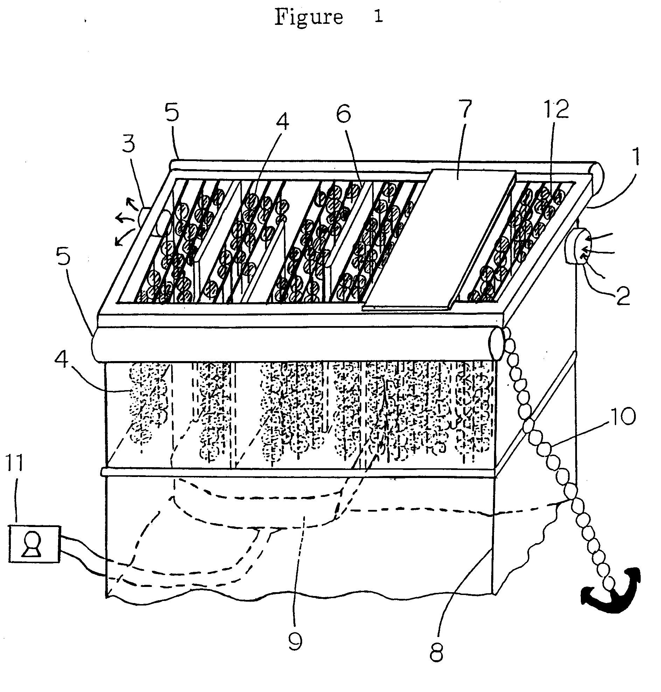

Fig. 1 is a schematic diagram of a water purification device according to this invention having an air diffusion means and a skirt.

### DETAILED DESCRIPTION OF THE INVENTION

The treatment tank of this invention is formed by walls enclosing a certain water area to a certain water depth, and does not require a base.

There is no particular limitation on the material used to construct the tank provided that it can be floated in water by means of a float, however wood or plastic are normally to be preferred as they are economical and easy to work with.

Even if the specific gravity of the material itself is high, the specific gravity of the whole assembly may be made to approach 1 by means of a suitable design as in the case of steel plate with hollows for example, so that it can still be floated by a float. The float may be made part of the tank in a one-piece construction, or may be separate from the tank.

The tank is provided with at least one water inlet and one water outlet, and from the viewpoint of purifying water polluted by water-bloom, the water inlet should preferably be situated in the vicinity of the water surface.

It is not essential that the tank be installed in a location where the water flows, however water flow inside the tank may be assisted by a suction pump at the water inlet and/or a discharge pump at the water outlet. From the viewpoint of making the water flow uniformly in the tank, discharge means is provided.

The tank may be provided with a suitable number of partitions in order to increase the opportunity for polluted water to come into contact with the biological supports in the tank and ensure that the water stays in the tank for a sufficient time. The partitions may be disposed in the tank in any manner provided that polluted water flows from the inlet to the outlet, but preferably, the number of partitions is from 2 to 5 and the tank is divided into 3 to 6 stages.

In particular, when purifying water polluted by water-bloom, it is desirable that the water-bloom dies as it passes through the tank. For this purpose, a water area shielded from light is provided upstream inside the tank.

This light-shielded area may easily be provided by a light shielding means laid on the water surface where the tank is installed. The light shielding means may consist of a plastic sheet or plate, or a cover made of another common material having light shielding properties which causes water-bloom to die. This cover may further consist of a panel of solar cells which can supply electric energy for the water suction means, water discharge means or air diffusion means to be hereinafter described.

The above light-shielded area which is situated upstream is provided adjacent to the minimum water area which is required for the tank to effectively function as a sedimentation tank.

The surface area of the light-shielded area is suitably chosen with regard to the speed of passage of polluted water so that it causes water-bloom to die.

In practice, it was found that water-bloom died when light was shielded for 15 minutes or longer.

According to this invention, the biological support in the tank may be suitably selected from those known in the art depending on the polluting substances, installation site and desired degree of water purification.

A plurality of U-shaped biological supports woven on a frame preferably as described in Japanese Tokkai Sho 62-3784 are used (see e.g. "Yosui to Haisui", Vol. 23, No. 4, pp. 3 - 33 and pp. 43 - 81).

A plurality of these biological supports may for example be suspended from rods in the upper part of the tank according to known methods, or stretched on a frame which is then fixed in the tank.

The distance between the biological supports is suitably chosen with regard to the level of pollution and the flowrate, etc. One method for installing these supports is described in, for example, Japanese Tokkai Hei 4-222587 (Koho).

The type of biological support is selected according to the type of pollution, the required degree of purification and the items which are to be evaluated for purification. If necessary, two or more biological supports having different biological actions may also be used.

According to the present invention, it is preferable to provide an air diffusion means at the bottom of the tank so that microorganisms adhering to the biological supports can efficiently bring about the oxidative decomposition of polluting substances. This air diffusion means may be suitably chosen from those known in the art, however a diffusion means wherein a large number of air holes are provided on a surface is preferable as it produces small air bubbles.

Preferably, the diameter of these air bubbles is 0.1 mm - 2 mm.

The amount of diffused air is preferably 50 - 200 liter/min, and more preferably 100 - 150 liter/min.

According to the present invention, moreover, a skirt is preferably provided on the lower edge of the tank to prevent polluted water in the tank from flowing to the outside of the tank around the base before it has been sufficiently purified. The lower edge of this skirt preferably reaches to the bottom of the water, but where the water is very deep, the depth of the skirt may be of about the same order as the maximum distance between opposite sides of the tank (including partitions) at its upper edge. When the skirt reaches to the bottom of the water, the skirt should preferably be able to lengthen and shorten so that it can follow the up and down motion of the water surface depending on the water volume. Such a skirt which is able to lengthen and shorten may easily be fabricated from for example a plastic sheet, corrugated rubber sheet or material which can be rolled and unrolled.

The purification device of this invention may be free to move in the water which it is intended to purify, but it may also be fixed in a certain water area by means of an anchor or the like.

The operation and advantages of the purification device according to this invention will now be described with reference to specific examples.

### EXAMPLES

Fig. 1 shows a water purification device according to this invention comprising biological supports 4, light shielding means 7, air diffusion means 9 and skirt 8, the device being made to float in the water by means of a float 5.

When polluted water flows into the purification device according to this invention, polluting substances adhere to biological supports 4 suspended from support rods 12 in the vicinity of a water inlet 2. In this process, not only organic matter but also inorganic matter such as mud and sand adhere to the supports.

Initially, the organic matter in the polluting substances is decomposed by aerobic bacteria. When more polluting substances come to adhere to the supports, the inner layer which has been decomposed by aerobic bacteria, becomes anaerobic so that decomposition by anaerobic bacteria occurs. The organic matter which acted as a binder for the adhering substances is thereby totally or partially destroyed.

Due to this process, after the adhering substances have accumulated for a certain time, they can no longer support their own weight and fall to the bottom. More polluting substances then adhere to the rods, and the cycle of adhesion and falling is repeated.

In the vicinity of the water inlet 2, the purification tank 1 therefore functions as a sedimentation tank.

Polluted water outside the sedimentation area enters an area shielded from light by the light shielding plate 7, adjacent partitions 6 and the biological supports 4.

Water-bloom therefore dies, and the dead water-bloom adheres to the supports 4 where it is decomposed by microorganisms.

The fine bubbles emitted by the air diffusion means 9 increase the amount of dissolved oxygen in the water so that decomposition by microorganisms and aerobic bacteria of adhering organic substances such as dead water-bloom, proceeds more smoothly.

## Claims

1. A floating water purification device comprising at least a treatment tank having no base enclosing a certain water area and a float which causes said tank to float in water, characterized in that said treatment tank comprises a plurality of inner U-shaped biological supports woven on a frame together with side walls enclosing the water area, at least one water inlet in a first vertical side wall and at least one water outlet in a second vertical side wall facing said first side wall; at least one vertical partition dividing the tank into a plurality of areas to ensure that water will stay within the tank for a time sufficient for purification, wherein said device is provided with means for recirculating and/or discharging water in a treatment tank and which is further provided with light-shielding means on the upper surface of said tank whereby at least part of said tank is shielded from light, said light-shielding means being positioned upstream inside the tank and adjacent to a sedimentation zone and to said at least one water inlet in the vicinity of which said tank is capable of functioning as a sedimentation tank, so that polluted water outside the sedimentation area enters an area shielded from light of said at least one water inlet and adjacent a sedimentation zone wherein said tank is capable of functioning as a sedimentation tank.

2. A floating water purification device as claimed in claim 1, wherein said treatment tank is provided with a skirt positioned on the lower edge of said treatment tank wherein said skirt extends to a depth which is equal to or greater than the maximum distance between opposite side walls of said tank.

3. A floating water purification device as claimed in claim 2, further comprising means for increasing or decreasing the depth to which said skirt extends.

4. A floating water purification device as claimed in claims 1 to 3 wherein said treatment tank is further provided with anchor means.

5. A floating water purification device as claimed in claims 1 to 4 which is provided with air diffusion means at the bottom of said tank.

6. A water purification method characterized in that the water purification device as claimed in claim 1 is placed in polluted water to be purified.

7. A water-bloom eliminating method characterized in that the water purification device as claimed in claim 1 is placed in polluted water wherein water-bloom is growing.

## Patentansprüche

1. Schwimmende Wasserreinigungsvorrichtung, aufweisend wenigstens einen Behandlungstank, der keine Basis aufweist und einen bestimmten Wasserbereich einschließt, und einen Schwimmkörper, der den Tank veranlaßt, im Wasser zu schwimmen, dadurch gekennzeichnet, daß der Behandlungstank mehrere innere U-förmige biologische Träger aufweist, die auf einen Rahmen gewoben sind zusammen mit Seitenwänden, welche den Wasserbereich einschließen, wenigstens einen Wassereinlaß in einer ersten vertikalen Seitenwand und wenigstens einen Wasserauslaß in einer zweiten vertikalen Seitenwand, die der ersten Seitenwand gegenüberliegt; wenigstens eine vertikale Trennwand, welche den Tank in mehrere Bereiche unterteilt, um sicherzustellen, daß Wasser in dem Tank für eine Zeit verbleibt, die zur Reinigung ausreicht, wobei die Vorrichtung mit einer Einrichtung zum Wiederumwälzen und/oder Austragen von Wasser in einem Behandlungstank versehen ist, und die außerdem mit einer Lichtabschirmeinrichtung auf der Oberseite des Tanks versehen ist, wodurch wenigstens ein Teil des Tanks vom Licht abgeschirmt wird, wobei die Lichtabschirmeinrichtung auf der stromaufwärtigen Seite innerhalb des Tanks und benachbart zu einer Sedimentationszone und zu dem wenigstens einen Wassereinlaß angeordnet ist, in der Umgebung, von welchem der Tank in der Lage ist, als Sedimentationstank zu arbeiten, so daß verschmutztes Wasser außerhalb des Sedimentationsbereichs einem von Licht abgeschirmten Bereich von dem wenigstens einen Wassereinlaß zuströmt, und benachbart zu einer Sedimentationszone, wobei der Tank in der Lage ist, als Sedimentationstank zu arbeiten.

2. Schwimmende Wasserreinigungsvorrichtung nach Anspruch 1, wobei der Wassertank mit einer Schürze versehen ist, die am unteren Rand des Behandlungstanks vorgesehen ist, wobei die Schürze sich auf eine Tiefe erstreckt, die gleich oder größer als der maximale Abstand zwischen gegenüberliegenden Seitenwänden des Tanks ist.

3. Schwimmende Wasserreinigungsvorrichtung nach Anspruch 2, außerdem aufweisend eine Einrichtung zum Vergrößern oder Verkleinern der Tiefe, auf welche sich die Schürze erstreckt.

4. Schwimmende Wasserreinigungsvorrichtung nach einem der Ansprüche 1 bis 3, wobei der Behandlungstank außerdem mit einer Ankereinrichtung versehen ist.

5. Schwimmende Wasserreinigungsvorrichtung nach einem der Ansprüche 1 bis 4, die mit der Luftverteilungseinrichtung am Boden des Tanks versehen ist.

6. Wasserreinigungsverfahren, dadurch gekennzeichnet, daß die Wasserreinigungsvorrichtung nach Anspruch 1 in zu reinigendem Wasser angeordnet ist.

7. Wasserbewuchsbeseitigungsverfahren, dadurch gekennzeichnet, daß die Reinigungsvorrichtung nach Anspruch 1 in verschmutztem Wasser angeordnet ist, in welchem Wasserbewuchs wächst.

## Revendications

1. Dispositif flottant de purification de l'eau, comprenant au moins un réservoir de traitement sans fond entourant une certaine étendue d'eau, et un flotteur qui permet au réservoir de flotter dans l'eau,
caractérisé en ce que ledit réservoir de traitement comprend une pluralité de supports biologiques intérieurs en forme de U qui sont tissés sur un cadre, ainsi que des parois latérales qui entourent l'étendue d'eau, au moins une admission d'eau prévue dans une première paroi latérale verticale, et au moins une évacuation d'eau prévue dans une deuxième paroi latérale verticale en regard de la première paroi latérale, au moins une cloison verticale qui divise le réservoir en une pluralité de zones pour que l'eau reste dans le réservoir suffisamment longtemps pour être purifiée, ledit dispositif comportant des moyens pour remettre en circulation et/ou décharger l'eau dans un réservoir de traitement et comportant en outre sur la face supérieure du réservoir des moyens de masquage de la lumière, au moins une partie du réservoir étant ainsi à l'abri de la lumière, lesdits moyens de masquage de la lumière étant placés en amont, à l'intérieur du réservoir près d'une zone de sédimentation et d'au moins une admission d'eau au voisinage de laquelle le réservoir est apte à fonctionner en tant que réservoir de sédimentation, de l'eau polluée extérieure à la zone de sédimentation pénétrant dans une zone à l'abri de la lumière par au moins une admission d'eau et près d'une zone de sédimentation où le réservoir peut fonctionner en tant que réservoir de sédimentation.

2. Dispositif flottant de purification de l'eau selon la revendication 1, dans lequel le réservoir de traitement comporte une jupe placée sur le bord inférieur du réservoir de traitement, la jupe s'étendant sur une profondeur égale ou supérieure à la distance minimum entre des parois latérales opposées dudit réservoir.

3. Dispositif flottant de purification de l'eau selon la revendication 2, ledit dispositif comprenant en outre des moyens pour augmenter ou diminuer la profondeur sur laquelle la jupe s'étend.

4. Dispositif flottant de purification de l'eau selon les revendications 1 à 3, dans lequel le réservoir de traitement comporte des moyens d'ancrage.

5. Dispositif flottant de purification de l'eau selon les revendications 1 à 4, ledit dispositif comportant des moyens de diffusion d'air situés sur le fond du réservoir.

6. Procédé de purification de l'eau, caractérisé en ce que le dispositif de purification de l'eau selon la revendication 1 est placé dans de l'eau polluée qui doit être purifiée.

7. Procédé d'élimination de la prolifération d'algues, caractérisé en ce que le dispositif de purification de l'eau selon la revendication 1 est placé dans de l'eau polluée dans laquelle se développe une prolifération d'algues.
